# EUROPÄISCHE PATENTSCHRIFT

(11) **EP 1 923 288 B1**
(45) Veröffentlichungstag und Bekanntmachung des Hinweises auf die Patenterteilung: **18.08.2010**
(21) Anmeldenummer: 07120586.8
(22) Anmeldetag: 13.11.2007
(51) Int. Cl.: B60W 20/00, B60W 10/06, B60W 10/28, B60W 10/08, B60W 10/26, B60W 10/10, H01M 8/04

(54) **Hybrid-Antrieb mit Brennstoffzelle für ein Kraftfahrzeug**
Hybrid power train including a fuel cell for a motor vehicle
Entraînement hybride comprenant un système de pile à combustible pour un véhicule automobile

(30) Priorität: 17.11.2006 DE 102006054669
(43) Veröffentlichungstag der Anmeldung: 21.05.2008
(73) Patentinhaber: J. Eberspächer GmbH & Co. KG, 73730 Esslingen (DE)
(72) Erfinder: Kaupert, Andreas, 73730 Esslingen (DE)
(74) Vertreter: BRP Renaud & Partner

(56) Entgegenhaltungen:
- EP-A- 1 203 697
- EP-A- 1 679 757
- DE-A1- 10 315 255
- DE-A1- 19 913 794
- DE-C1- 19 913 795
- DE-U1-202006 008 898
- US-B1- 6 428 444

## Beschreibung

Die vorliegende Erfindung betrifft einen Hybrid-Antrieb für ein Kraftfahrzeug, mit den Merkmalen des Oberbegriffs des Anspruchs 1. Die Erfindung betrifft außerdem ein mit einem derartigen Hybridantrieb ausgestattetes Kraftfahrzeug.

Ein Hybrid-Antrieb dieser Art charakterisiert sich dadurch, dass zum Generieren von Antriebsleistung sowohl ein Verbrennungsmotor als auch zumindest ein Elektromotor vorgesehen sind. Während der Verbrennungsmotor in konventioneller Weise einen Kohlenwasserstoff enthaltenden Kraftstoff verbrennt, um die Antriebsleistung zu erzeugen, setzt der jeweilige Elektromotor zur Erzeugung der Antriebsleistung elektrische Energie um. Bei einem kleinen Bedarf an Antriebsleistung, z.B. im Stadtverkehr, kann ein mit dem Hybrid-Antrieb ausgestattetes Fahrzeug bei ausgeschaltetem Verbrennungsmotor in einem Elektromotorbetrieb angetrieben werden. Die hierzu benötigte elektrische Energie wird über wenigstens eine Batterie bereitgestellt. Bei einem größeren Antriebsleistungsbedarf, z.B. bei Überlandfahrten bzw. Fahrten außerhalb geschlossener Ortschaften, wird das Fahrzeug bei ausgeschaltetem Elektromotor in einem Verbrennungsmotorbetrieb angetrieben, wobei gleichzeitig die Batterien aufgeladen werden können. Hierzu kann zweckmäßig der Elektromotor als Generator für die Erzeugung elektrischer Energie und für die Batterieladung betrieben werden. Ferner ist es bei Hybridfahrzeugen üblich, mit wenigstens einem Rekuperator beim Abbremsen des Fahrzeugs elektrische Energie zu gewinnen, mit der die Batterie nachladbar ist. Optional ist außerdem eine Boost-Funktion denkbar, bei welcher der Elektromotor den Verbrennungsmotor, z.B. bei Beschleunigungsvorgängen, unterstützt.

In der Praxis zeigt sich jedoch, dass bei Fahrzeugen, die lange Zeit im Stadtverkehr betrieben werden, die wenigstens eine Batterie soweit entladen wird, dass auch bei einem geringen Antriebsleistungsbedarf trotz der Rückgewinnung von Bremsenergie der Verbrennungsmotor gestartet werden muss, um die jeweilige Batterie wieder aufzuladen bzw. um die erforderliche Antriebsleistung bereitzustellen.

Aus der gattungsbildenden DE 199 13 794 A1 ist ein Hybrid-Antrieb für ein Kraftfahrzeug bekannt, der einen Verbrennungsmotor zum Generieren von Antriebsleistung durch Verbrennen eines Kohlenwasserstoff enthaltenden Kraftstoffs, einen Kraftstofftank zum Speichern des Kraftstoffs, wenigstens einen Elektromotor zum Generieren von Antriebsleistung durch Umsetzen von elektrischer Energie, wenigstens eine Batterie zum Speichern von elektrischer Energie sowie ein Brennstoffzellensystem zum Generieren von elektrischer Energie aus dem Kraftstoff und aus einem Sauerstoff enthaltenden Oxidator aufweist. Dabei sind der Verbrennungsmotor und das Brennstoffzellensystem zur Versorgung mit Kraftstoff an den Kraftstofftank angeschlossen.

Aus der EP 1 678 757 A1 ist es bekannt, bei einem Brennstoffzellensystem, Brennerabgas einem Reformer rückzuführen.

Die vorliegende Erfindung beschäftigt sich mit dem Problem, für einen Hybrid-Antrieb der eingangs genannten Art bzw. für ein damit ausgestattetes Fahrzeug eine verbesserte Ausführungsform anzugeben, die sich insbesondere dadurch auszeichnet, dass die wenigstens eine Batterie die erforderliche elektrische Energie über einen längeren Zeitraum bereitstellen kann bzw. dass der wenigstens eine Elektromotor über einen längeren Zeitraum ohne Zuschalten des Verbrennungsmotors betrieben werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, den Hybrid-Antrieb bzw. das damit ausgestattete Kraftfahrzeug mit einem Brennstoffzellensystem auszustatten, das unter der Verwendung des für den Verbrennungsmotor ohnehin vorhandenen Kraftstoffs elektrische Energie liefert, die zum Aufladen der wenigstens einen Batterie und/oder zum Versorgen des wenigstens einen Elektromotors genutzt werden kann. Ein derartiges Brennstoffzellensystem eignet sich insbesondere zur Bereitstellung kleinerer elektrischer Leistungen, die jedoch ausreichen, die Entladung der wenigstens einen Batterie zu verlangsamen, indem die vom Brennstoffzellensystem bereitgestellte elektrische Energie zumindest teilweise zum permanenten Nachladen der wenigstens einen Batterie und/oder zum direkten Verbrauch im wenigstens einen Elektromotor verwendet wird. Der Hybrid-Antrieb kann somit über einen verlängerten Zeitraum unabhängig vom Verbrennungsmotor betrieben werden. Bemerkenswert ist außerdem, dass das Brennstoffzellensystem bei der Generierung der elektrischen Energie aus dem Kraftstoff einen deutlich besseren Wirkungsgrad aufweist als der Verbrennungsmotor, wodurch insgesamt die Emissionswerte und der Kraftstoffverbrauch des Hybrid-Antriebs verbessert werden können.

Erfindungsgemäß charakterisiert sich der Hybrid-Antrieb dadurch, dass das Brennstoffzellensystem einen Reformer zum Generieren eines Wasserstoffgas enthaltenden Anodengases aus dem Kraftstoff und dem Oxidator und eine Brennstoffzelle zum Generieren der elektrischen Energie aus dem Anodengas und einem Sauerstoffgas enthaltenden Kathodengas aufweist. Darüber hinaus weist das Brennstoffzellensystem beim erfindungsgemäßen Hybrid-Antrieb einen Wärmeübertrager auf, der einerseits in eine Anodenabgas dem Reformer rückführende Rückführungsleitung und andererseits in eine dem Reformer den Oxidator zuführende Oxidatorleitung und/oder in eine der Brennstoffzelle das Kathodengas zuführende Kathodengasleitung eingebunden ist. Durch die Rückführung von heißen Anodenabgas kann mit Hilfe des Wärmeübertragers eine Vorheizung des dem Reformer zuzuführenden Oxidators bzw. einer Vorheizung des der Brennstoffzelle zuzuführenden Kathodengases realisiert werden. Gleichzeitig kann das rückgeführte Anodenabgas im Reformer die Effektivität des Reformerbetriebs verbessern.

Bei einer bevorzugten Ausführungsform ist das Brennstoffzelensystem so ausgelegt, dass damit in einem Nennbetriebspunkt des Brennstoffzellensystems zumindest ein elektrischer Verbraucher eines mit dem Hybrid-Antrieb ausgestatteten Fahrzeugs, wie z.B. eine Standklimatisierungseinrichtung zur Klimatisierung eines Raums des Fahrzeugs oder ein elektrisches Bordnetz des Fahrzeugs, auch bei ausgeschaltetem Verbrennungsmotor betrieben werden kann. Sofern in diesem Nennbetriebspunkt des Brennstoffzellensystems, z.B. bei einem reduzierten Energiebedarf des wenigstens einen Verbrauchers, also z.B. der Klimatisierungseinrichtung bzw. des Bordnetzes, vom Brennstoffzellensystem überschüssige elektrische Energie generiert wird, kann diese, beispielsweise mittels einer entsprechender Steuerung, zum Versorgen des wenigstens einen Elektromotors und/oder zum Aufladen oder Nachladen der wenigstens einen Batterie verwendet werden. Mit anderen Worten, die Erfindung schlägt vor, bei einem Fahrzeug, das ohnehin mit einem Brennstoffzellensystem ausgestattet ist, dieses zur Versorgung des wenigstens einen Elektromotors bzw. zum Nach- bzw. Aufladen der wenigstens einen Batterie zu verwenden, sobald im Nennbetriebspunkt, also in einem hinsichtlich der Schadstoffemission, Kraftstoffverbrauch und Wirkungsgrad optimierten Betriebspunkt, vom Brennstoffzellensystem überschüssige elektrische Energie generiert wird. Hierdurch ergibt sich ein zusätzlicher Nutzen für das Brennstoffzellensystem in einem Fahrzeug, das mit einem Hybrid-Antrieb ausgestattet ist. Gleichzeitig wird durch das Brennstoffzellensystem die Möglichkeit geschaffen, mit Hilfe von Gasen des Brennstoffzellensystems, z.B. mit einem Wasserstoff enthaltenden Reformatgas, die Emissionswerte des Verbrennungsmotors zu verbessern. Beispielsweise können heiße und reaktive Gase des Brennstoffzellensystems dazu genutzt werden, einen im Abgasstrang des Verbrennungsmotors angeordneten Katalysator, z.B. einen Oxidationskatalysator oder einen NOX-Speicherkatalysator, während eines Warmlaufbetriebs rasch auf seine Betriebstemperatur zu bringen und/oder eine Regeneration des jeweiligen Katalysators zu unterstützen.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

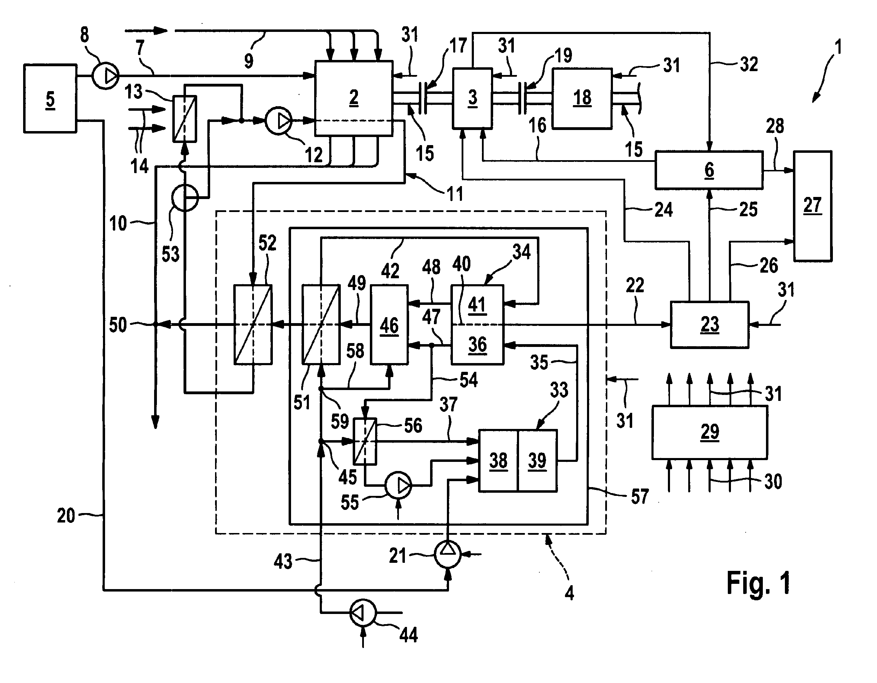

Die einzige Fig. 1 zeigt eine stark vereinfachte, schaltplanartige Prinzipdarstellung eines Hybrid-Antriebs.

Entsprechend Fig. 1 umfasst ein Hybrid-Antrieb 1, der vorzugsweise in einem im Übrigen nicht dargestellten Kraftfahrzeug angeordnet ist, einen Verbrennungsmotor 2, zumindest einen Elektromotor 3 und ein Brennstoffzellensystem 4. Letzteres ist durch einen mit unterbrochener Linie gezeichneten Rahmen gekennzeichnet. Ferner umfasst der Hybrid-Antrieb 1 einen Kraftstofftank 5 zum Speichern eines Kraftstoffs. Als Kraftstoff wird ein Kohlenwasserstoff bzw. ein Kohlenwasserstoff enthaltender Kraftstoff verwendet, beispielsweise Benzin, Diesel, Erdgas und Biodiesel. Außerdem umfasst der Hybrid-Antrieb 1 zumindest eine Batterie 6 zum Speichern von elektrischer Energie. Grundsätzlich können mehrere Batterien 6 vorgesehen sein.

Der Verbrennungsmotor 2 kann als Saugmotor oder als aufgeladener Motor ausgestaltet sein und dient zum Generieren von Antriebsleistung für das Kraftfahrzeug, wozu er den Kraftstoff umsetzt bzw. verbrennt. Der Verbrennungsmotor 2 ist über eine Kraftstoffleitung 7, in der eine Fördereinrichtung 8, z.B. eine Pumpe, angeordnet ist, an den Kraftstofftank 5 angeschlossen. Eine Frischgasleistung 9 versorgt den Verbrennungsmotor 2 mit Frischgas, das üblicherweise durch Luft gebildet ist. Eine Motorabgasleitung 10 für die bei der Verbrennung des Kraftstoffs mit dem Frischgas entstehenden Motorabgase vom Verbrennungsmotor 2 ab.

Der Verbrennungsmotor 2 kann außerdem in üblicher Weise in einem Kühlkreis 11 eingebunden sein, in dem eine Fördereinrichtung 12, z.B. eine Pumpe, angeordnet ist, um das jeweilige Kühlmittel anzutreiben. Der Kühlkreis 11 enthält in üblicher Weise einen Wärmeübertrager 13, der regelmäßig als Kühler bezeichnet wird und der im Betrieb des Fahrzeugs mit einer durch Pfeile angedeuteten Kühlgasströmung beaufschlagt wird, die durch den Fahrtwind und/oder durch ein hier nicht gezeigtes Gebläse erzeugt wird.

Der Verbrennungsmotor 2 ist in einen Antriebsstrang 15 des Hybrid-Antriebs 1 bzw. des Fahrzeugs eingebunden. Im Betrieb des Verbrennungsmotors 2 gibt er seine Antriebsleistung auf diesen Antriebsstrang 15 ab.

Im gezeigten Beispiel umfasst der Hybrid-Antrieb 1 nur einen Elektromotor 3. Es ist klar, dass der Hybrid-Antrieb 1 grundsätzlich auch mehrere Elektromotoren 3 aufweisen kann. Beispielsweise können ein Haupt-Elektromotor zum Antreiben der Räder einer Vorderachse des Fahrzeugs sowie zwei Zusatz-Elektromotoren zum Antreiben jeweils eines Rads einer Hinterachse des Fahrzeugs vorgesehen sein. Wenn im vorliegenden Zusammenhang von einem Elektromotor 3 bzw. von einer Batterie 6 gesprochen wird, können stets in analoger Weise auch mehrere Elektromotoren 3 bzw. mehrere Batterien 6 gemeint sein.

Der Elektromotor 3 dient ebenfalls zum Generieren von Antriebsleistung für das Kraftfahrzeug, wozu er elektrische Energie umsetzt. Auch der Elektromotor 3 ist in den Antriebsstrang 15 eingebunden und leitet dementsprechend die Antriebsleistung in diesen Antriebsstrang 15 ein. Zur Versorgung mit elektrischer Energie ist der Elektromotor 3 zumindest an die Batterie 6 angeschlossen, z.B. über eine elektrische Leitung 16.

Der Antriebsstrang 15 weist zwischen dem Verbrennungsmotor 2 und dem Elektromotor 3 eine Kupplung 17 auf, die es ermöglicht, den Antriebsstrang 15 an dieser Stelle zu unterbrechen bzw. zu öffnen. Ferner ist der Elektromotor 3 im Antriebsstrang 15 zwischen dem Verbrennungsmotor 2 und einem Getriebe 18 angeordnet, das die vom jeweiligen Motor 2, 3 eingehende Antriebsleistung ausgangsseitig entsprechend einem eingelegten Gang übersetzt an die Antriebsräder des Fahrzeugs überträgt. Ferner enthält der Antriebsstrang 15 zwischen dem Getriebe 18 und dem Elektromotor 3 eine weitere Kupplung 19, mit der der Antriebsstrang 15 auch an dieser Stelle geöffnet bzw. getrennt werden kann.

Das Brennstoffzellensystem 4 dient zum Generieren von elektrischer Energie, wozu es einen Wasserstoff enthaltenden Brennstoff, nämlich den Kohlenwasserstoff enthaltenden Kraftstoff des Verbrennungsmotors 2 mit einem Sauerstoff enthaltenden Oxidator, vorzugsweise Luft, umsetzt. Zur Versorgung mit dem Kraftstoff ist das Brennstoffzellensystem 4 über eine weitere Kraftstoffleitung 20, in der eine kombinierte Förder- und Dosiereinrichtung 21, z.B. eine Pumpe, angeordnet sein kann, an den Kraftstofftank 5 angeschlossen. Die vom Brennstoffzellensystem 4 generierte elektrische Energie ist über eine elektrische Leitung 22 abgreifbar und ist direkt oder indirekt dem Elektromotor 3 und/oder der Batterie 5 zuführbar. Im vorliegenden Fall erfolgt die Stromversorgung indirekt. Hierzu verbindet die elektrische Leitung 22 das Brennstoffzellensystem 4 mit einem Gleichstrom-Spannungswandler 23 oder DC/DC-Wandler 23, um die vom Brennstoffzellensystem 4 bereitgestellte elektrische Spannung auf die von der Batterie 6 bzw. vom Elektromotor 3 benötigte elektrische Spannung zu transformieren. Der Wandler 23 ist dann beispielsweise über eine elektrische Leitung 24 an den Elektromotor 3 und/oder über eine elektrische Leitung 25 an die Batterie 6 angeschlossen. Ferner kann der Wandler 23 über eine elektrische Leitung 26 an wenigstens einen elektrischen Verbraucher 27 angeschlossen sein. Ebenso kann das Brennstoffzellensystem 4 direkt an besagten wenigstens einen Verbraucher 27 angeschlossen sein. Über eine elektrische Leitung 28 kann auch die Batterie 6 an den wenigstens einen Verbraucher 27 angeschlossen sein.

Der Hybrid-Antrieb 1 umfasst außerdem eine Steuerung 29, mit deren Hilfe der Hybrid-Antrieb 1 betrieben werden kann. Hierzu ist die Steuerung 29 eingangsseitig über eine Vielzahl von Eingängen 30 bzw. über ein Eingangsbussystem an verschiedene Signalgeber angeschlossen, beispielsweise an ein Gaspedal und an ein Bremspedal des Fahrzeugs, an eine Messeinrichtung zum Bestimmen des Beladungszustands der Batterie 6, an Temperatursensoren und dergleichen mehr. Ausgangsseitig ist die Steuerung 29 über eine Vielzahl von Ausgängen 31 bzw. über ein Ausgangsbussystem an mehrere Komponenten des Hybrid-Antriebs 1 angeschlossen, um die jeweilige Komponente betätigen zu können. Beispielsweise kann die Steuerung 29 so an den Elektromotor 3, an den Verbrennungsmotor 2, an das Getriebe 18, an das Brennstoffzellensystem 4 und beispielsweise auch an den Wandler 23 angeschlossen sein.

Die Steuerung 29 kann beispielsweise so ausgestaltet sein, dass der Hybrid-Antrieb 1 in einem Elektromotorbetrieb betrieben werden kann, in dem die Antriebsleistung ausschließlich durch den Elektromotor 3 in den Antriebsstrang 15 eingeleitet wird, während der Verbrennungsmotor 2 ausgeschaltet ist. In einem Verbrennungsmotorbetrieb ist dagegen der Elektromotor 3 ausgeschaltet, so dass die Antriebsleistung ausschließlich über den Verbrennungsmotor 2 in den Antriebsstrang 15 eingeleitet wird. Im Verbrennungsmotorbetrieb kann der Elektromotor 3 als Generator betrieben werden, um so elektrische Energie zum Aufladen der Batterie 6 zu erzeugen. Hierzu kann der Elektromotor 3 über eine entsprechende elektrische Leitung 32 an die Batterie 6 bzw. an ein entsprechendes Ladegerät angeschlossen sein. Grundsätzlich können dabei die elektrischen Leitungen 16 und 32 zusammenfallen.

Desweiteren ist grundsätzlich auch ein Boost-Betrieb möglich, bei dem der Elektromotor 3 und der Verbrennungsmotor 2 Antriebsleistung in den Antriebsstrang 15 einleiten. Desweiteren ist mittels der Steuerung 29 auch ein Rekuperationsbetrieb realisierbar, bei dem zum Abbremsen des Fahrzeugs z.B. über den als Generator betriebenen Elektromotor 3 Antriebsleistung aus der Antriebswelle 15 entzogen bzw. über wenigstens einen, hier nicht separat dargestellten Rekuperator Bewegungsenergie dem Fahrzeug entzogen wird und in der Batterie 6 als elektrische Energie gespeichert wird. Die Steuerung 29 bildet dabei ebenso wie der Wandler 23 einen Bestandteil einer im Übrigen nicht gezeigten, vergleichsweise komplexen Steuerungselektronik.

Die Steuerung 29 kann nun so ausgestaltet sein, dass im Elektromotorbetrieb zumindest ein Teil der vom Brennstoffzellesystem 4 generierten elektrischen Energie zum Betreiben des Elektromotors 3 bzw. zum Aufladen sowie zum Nachladen der Batterie 6 verwendet werden kann. Das bedeutet, dass im Elektromotorbetrieb, also unabhängig vom Verbrennungsmotor 2 vom Brennstoffzellensystem 4 elektrische Energie bereitgestellt wird, um damit die Batterie 6 permanent nachzuladen und/oder um damit den Elektromotor 3 zumindest teilweise zu versorgen. Hierdurch kann die Zeitdauer, während der Hybrid-Antrieb 1 im Elektromotorbetrieb verbleiben kann, verlängert werden.

Vorzugsweise ist die Steuerung 29 so ausgestaltet, dass im Elektromotorbetrieb der Verbrennungsmotor 2 erst dann zugeschaltet wird bzw. dass erst dann vom Elektromotorbetrieb in den Verbrennungsmotorbetrieb umgeschaltet wird, wenn in den Antriebsstrang 15 eine vorbestimmte Antriebsleistung eingeleitet werden soll, beispielsweise um eine gewünschte Fahrzeuggeschwindigkeit und/oder eine gewünschte Fahrzeugbeschleunigung erzielen zu können. Das bedeutet, dass die Steuerung 29 unterhalb der genannten vorbestimmten Antriebsleistung den Hybrid-Antrieb 1 im Elektromotorbetrieb betreibt, solange dies die Energieabgabe des Brennstoffzellensystems 4 und/oder der Ladezustand der Batterie 6 und/oder der Energiebedarf des Elektromotors 3 zulässt bzw. zulassen.

Durch diese Strategie wird der Einsatz des Verbrennungsmotors 2 im Stadtverkehr weitgehend reduziert. Dies ist von besonderem Vorteil, da das Brennstoffzellensystem 4 die Umwandlung des Kraftstoffs in elektrische Energie bei einem deutlich besseren Wirkungsgrad und bei geringeren Schadstoffemissionen realisiert als der Verbrennungsmotor 2.

Zusätzlich oder alternativ kann vorgesehen sein, dass die Steuerung 29 so ausgestaltet ist, dass im Elektromotorbetrieb erst dann elektrische Energie vom Brennstoffzellensystem 4 abgerufen wird, wenn der Elektromotor 3 einen vorbestimmten elektrischen Energiebedarf erreicht und/oder wenn die Batterie 6 einen vorbestimmten Entladungszustand erreicht. Ebenso kann als Schaltkriterium der Energiebedarf des Fahrzeugs bzw. des wenigstens einen Verbrauchers 27 berücksichtigt werden. Dementsprechend wird bei dieser Strategie entweder das Brennstoffzellensystem 4 eingeschaltet, wenn der jeweilige vorbestimmte Energiebedarf bzw. Entladungszustand erreicht wird. Für den Fall, dass das Brennstoffzellensystem 4 bereits aus einem anderen Grund eingeschaltet ist, lässt sich über diese Strategie die Entnahme der elektrischen Energie aus dem Brennstoffzellensystem 4 für den Hybrid-Antrieb 1 steuern.

Vorzugsweise handelt es sich beim Brennstoffzellensystem 4 um eine im Fahrzeug ohnehin vorhandene elektrische Energiequelle, die zum Versorgen bzw. zum Betreiben wenigstens eines elektrischen Verbrauchers 27 vorgesehen ist, und zwar unabhängig vom Verbrennungsmotor 2. Bei diesem wenigstens einen elektrischen Verbraucher 27 handelt es sich beispielsweise um eine Standklimatisierungseinrichtung bzw. um ein elektrisches Bordnetz des Fahrzeugs. Beispielsweise kann mit der Standklimatisierungseinrichtung ein Raum des Fahrzeugs, insbesondere ein Fahrgastraum, klimatisiert werden, also insbesondere beheizt und gekühlt werden. Durch die Versorgung des elektrischen Bordnetzes über das Brennstoffzellensystem 4 können eine Vielzahl von elektrischen Verbrauchern 27 auch bei ausgeschaltetem Verbrennungsmotor 2 betrieben werden, z.B. Komfortkomponenten, wie z.B. Navigationsgerät, TV-Gerät, oder Komponenten der Fahrzeugelektrik und Fahrzeugelektronik, wie z.B. Stellmotoren, ESP, ABS, Licht.

Die Steuerung 29 kann so ausgestaltet sein, dass sie auch dann, wenn sie erkennt, dass der jeweilige für das Brennstoffzellensystem 4 vorgesehene elektrische Verbraucher, z.B. Standklimatisierungseinrichtung und/oder Bordnetz, keinen oder nur einen reduzierten elektrischen Energiebedarf aufweist, das Brennstoffzellensystem 4 so ansteuert, dass es weiterhin in einem hinsichtlich Emissionswerte, Kraftstoffverbrauch und Wirkungsgrad optimierten Nennbetriebspunkt betrieben wird. Dabei anfallende überschüssige elektrische Energie kann dann durch die Steuerung 29 gesteuert dem Brennstoffzellensystem 4 für den Hybrid-Antrieb 1 entnommen und zum Aufladen der Batterie 6 und/oder zum Versorgen des Elektromotors 3 verwendet werden. Bei dem wenigstens einen Verbraucher 27 kann es sich beispielsweise um die besagte Standklimatisierungseinrichtung oder um das komplette Bordnetz des Fahrzeugs oder um beliebige andere einzelne elektrische Verbraucher, wie z.B. Mikrowellengerät und Kühlschrank, vorzugsweise in Nutzfahrzeugen, handeln.

Das Brennstoffzellensystem 4 weist in der hier vorgestellten, bevorzugten Ausführungsform einen Reformer 33 sowie zumindest eine Brennstoffzelle 34 auf. Der Reformer 33 dient zum Generieren eines Wasserstoffgas enthaltenden Anodengases aus dem Kraftstoff und dem Oxidator. Der Reformer 33 leitet das Anodengas über eine Anodengasleitung 35 einer Anodenseite 36 der Brennstoffzelle 34 zu. Eingangsseitig erhält der Reformer 33 über die Kraftstoffleitung 20 den Kraftstoff sowie über eine Oxidatorleitung 37 den Oxidator, der bevorzugt Luft ist. Der Reformer 33 enthält beispielsweise eine Gemischbildungseinrichtung 38, die den Kraftstoff und den Oxidator erhält, sowie eine Katalysatoreinrichtung 39, die letztlich das Anodengas generiert.

In der Brennstoffzelle 34 trennt ein Elektrolyt 40, insbesondere eine Membran, die Anodenseite 36 von einer Kathodenseite 41. Die Kathodenseite 41 erhält über eine Kathodengasleitung 42 ein Sauerstoffgas enthaltendes Kathodengas, das vorzugsweise durch Luft gebildet ist. Eine Versorgungsleitung 43, in der eine Fördereinrichtung 44, z.B. ein Gebläse oder ein Kompressor, angeordnet ist, versorgt die Oxidatorleitung 37 und die Kathodengasleitung 42 mit Luft, also mit dem Oxidator bzw. mit dem Kathodengas. Hierzu zweigt die Versorgungsleitung 43 bei 45 in die Oxidatorleitung 37 und in die Kathodengasleitung 42 ab. Es können auch getrennte Versorgungsleitungen 37 für den Reformer 33 bzw. 42 für die Brennstoffzelle 34 vorgesehen sein, die separate Fördereinrichtungen aufweisen.

Vorzugsweise ist an den Restgasbrenner 46 eine Kühlgasleitung 58 angeschlossen, vorzugsweise kathodenseitig, über die dem Restgasbrenner 46 ein geeignetes Kühlgas, insbesondere Luft, bedarfsabhängig zuführbar ist. Im Beispiel zweigt die Kühlgasleitung 58 bei 59 von der Kathodengasleitung 42 ab. Eine separate Kühlgaszuführung mit separater Fördereinrichtung ist ebenso möglich.

Das Brennstoffzellensystem 4 kann ferner einen Restgasbrenner 46 aufweisen, der dazu dient, ein Wasserstoffgas enthaltendes Anodenabgas, das auch Kohlenmonoxid enthalten kann, mit einem Sauerstoffgas enthaltendem Kathodenabgas zu verbrennen. Hierzu ist der Restgasbrenner 46 eingangsseitig an eine Anodenabgasleitung 47 und an eine Kathodenabgasleitung 48 angeschlossen. Ausgangsseitig führt eine Brennerabgasleitung 49 vom Restgasbrenner 46 ab, die bei 50 optional in die Motorabgasleitung 10 einmünden kann. In der Brennerabgasleitung 49 kann eine hier nicht gezeigte Rückschlagsperreinrichtung angeordnet sein, die ein Einströmen von Motorabgas in die Brennerabgasleitung 49 verhindert. Ebenso können vollständig getrennte Abgasleitungen für das Brennerabgas und das Motorabgas vorgesehen sein. Der Restgasbrenner 46 kann auch ausgangsseitig in die Brennstoffzelle 34 baulich integriert sein.

Das Brennstoffzellensystem 4 kann außerdem einen Wärmeübertrager 51 aufweisen, der im folgenden als Haupt-Wärmeübertrager 51 bezeichnet wird. Dieser Haupt-Wärmeübertrager 51 ist einerseits in die Brennerabgasleitung 49 und andererseits in die Kathodengasleitung 42 eingebunden und ermöglicht dadurch eine Wärmeübertragung zwischen dem heißen Brennerabgas und dem relativ kalten Kathodengas. Durch die Aufheizung des Kathodengases wird der Brennstoffzellenprozess begünstigt. Der Haupt-Wärmeübertrager 51 kann ausgangsseitig in den Restgasbrenner 46 integriert sein.

Das Brennstoffzellensystem 4 kann außerdem einen Wärmeübertrager 52 aufweisen, der im folgenden als Zusatz-Wärmeübertrager 52 bezeichnet wird. Sofern der Haupt-Wärmeübertrager 51 vorhanden ist, befindet sich der Zusatz-Wärmeübertrager 52 in der Brennerabgasleitung 49 stromab des Haupt-Wärmeübertragers 51. Der Zusatz-Wärmeübertrager 52 ist einerseits in die Brennerabgasleitung 49 und andererseits in den Kühlkreis 11 des Verbrennungsmotors 2 eingebunden. Hierdurch ist es möglich, über den Kühlkreis 11 und den Zusatz-Wärmeübertrager 52 den Verbrennungsmotor 2 vorzuheizen bzw. auf Betriebstemperatur zu halten, um für Startvorgänge des Verbrennungsmotors 2 dessen Verschleiß, Schadstoffemissionen und Kraftstoffverbrauch zu reduzieren. Über eine Ventileinrichtung 53 ist hierbei im Kühlkreis 11 der Kühler 13 umgehbar.

Alternativ oder zusätzlich ist es ebenso möglich, den Zusatz-Wärmeübertrager 52 einerseits wieder in die Brennerabgasleitung 49 und andererseits jedoch einen hier nicht gezeigten Heizkreis einzubinden, mit dessen Hilfe ein Fahrzeuginnenraum beheizt werden kann. Beispielsweise bildet dieser Heizkreis einen Bestandteil der zuvor genannten Standklimatisierungseinrichtung oder einer separaten, luftbetriebenen Standheizung.

Im vorliegenden Fall ist das Brennstoffzellensystem 4 außerdem mit einer Rückführungsleitung 54 ausgestattet, die einenends an die Anodenabgasleitung 47 und anderenends an die Eingangsseite des Reformers 33 angeschlossen ist. Über die Rückführungsleitung 54, in der eine Fördereinrichtung 55, z.B. eine Pumpe oder ein Gebläse, angeordnet ist, kann bedarfsabhängig Anodenabgas von der Anodenseite 36 zur Eingangsseite des Reformers 33 rückgeführt werden. Je nach Betriebszustand der Brennstoffzelle 34 kann das Anodenabgas mehr oder weniger Wasserstoffgas enthalten, das im Reformer 33 vorteilhaft zur Generierung des Anodengases 35 genutzt werden kann.

In die Rückführungsleitung 54 kann ein weiterer Wärmeübertrager 56, der im folgenden als Rückführwärmeübertrager 56 bezeichnet wird, eingebunden sein, der außerdem in die Oxidatorleitung 37 eingebunden ist. Hierdurch kann Wärme vom rückzuführenden Anodenabgas auf den dem Reformer 33 zuzuführenden Oxidator übertragen werden. Hierdurch kann das rückgeführte Anodenabgas gekühlt werden. In Verbindung mit der Anordnung des Rückführwärmeübertragers 56 in der Rückführungsleitung 54 stromauf der Fördereinrichtung 55 wird erreicht, dass die Fördereinrichtung 55 nur mit gekühltem Anodenabgas beaufschlagt wird, wodurch die Fördereinrichtung 55 vergleichsweise preiswert realisierbar ist. Es ist klar, dass der Rückführwärmeübertrager 56 statt in die Oxidatorleitung 37 auch in die Kathodengasleitung 42 oder in die Versorgungsleitung 43 eingebunden sein kann. Zumindest zwei oder alle der hier gezeigten separaten Wärmeübertrager 51, 52, 56 können baulich zu einer Einheit integriert sein.

Der Hybrid-Antrieb 1 kann als Voll-Hybrid oder als Parallel-Hybrid oder als Serien-Hybrid ausgestaltet sein. Ein Voll-Hybrid besitzt den hier gezeigten Aufbau und ermöglicht einen reinen Verbrennungsmotorbetrieb und einen reinen Elektromotorbetrieb. Sofern er zusätzlich einen gleichzeitigen Betrieb des Verbrennungsmotors 2 und des Elektromotors 3 ermöglicht, sog. Boost-Betrieb, handelt es sich um einen sogenannten Parallel-Hybrid. Bei einem Serien-Hybrid wird die Antriebsleistung im Antriebsstrang 15 ausschließlich durch den Elektromotor 3 bereit gestellt, während der Verbrennungsmotor 2 bedarfsabhängig zugeschaltet wird, um die Stromversorgung des Elektromotors 3 über einen entsprechenden zusätzlichen Generator zu gewährleisten. Hierbei wird die Antriebsleistung des Verbrennungsmotors 2 nicht in den Antriebsstrang 15 eingeleitet wird, sondern zum Antreiben des genannten Generators, also zum Generieren von elektrischer Energie genutzt.

Das Brennstoffzellensystem 4 kann außerdem mit wenigstens einer thermisch isolierenden Isolationsbox 57 ausgestattet sein, in der die heißen Komponenten des Brennstoffzellensystems 4 angeordnet sind. Es ist klar, dass diese Isolationsbox 57 aus einzelnen Teilboxen zusammengebaut sein kann. Bei der Brennstoffzelle 34 kann es sich beispielsweise um eine Hochtemperatur-Brennstoffzelle, insbesondere um eine Festkörper-Brennstoffzelle, sogenannte SOFC-Brennstoffzelle, handeln. Ebenso kann es sich grundsätzlich um eine Niedertemperatur-Brennstoffzelle handeln, insbesondere um eine PEM-Brennstoffzelle, die mit einer Protonen-Transport-Membran bzw. mit einer Polymer-Elektrolyt-Membran arbeitet. Sofern eine PEM-Brennstoffzelle zum Einsatz kommt, ist zweckmäßig eine Gasreinigungseinrichtung vorzusehen, um im Anodengas den Kohlenmonoxidgehalt zur reduzieren.

## Patentansprüche

1. Hybrid-Antrieb für ein Kraftfahrzeug,
- mit einem Verbrennungsmotor (2) zum Generieren von Antriebsleistung durch Verbrennen eines Kohlenwasserstoff enthaltenden Kraftstoffs,
- mit einem Kraftstofftank (5) zum Speichern des Kraftstoffs,
- mit wenigstens einem Elektromotor (3) zum Generierung von Antriebsleistung durch Umsetzen von elektrischer Energie,
- mit wenigstens einer Batterie (6) zum Speichern von elektrischer Energie,
- mit einem Brennstoffzellensystem (4) zum Generieren von elektrischer Energie aus dem Kraftstoff und aus einem Sauerstoff enthaltenden Oxidator,
- wobei der Verbrennungsmotor (2) und das Brennstoffzellensystem (4) zur Versorgung mit Kraftstoff an den Kraftstofftank (5) angeschlossen sind, und
- das Brennstoffzellensystem (4) einen Reformer (33) zum Generieren eines Wasserstoffgas enthaltenden Anodengases aus dem Kraftstoff und dem Oxidator und eine Brennstoffzelle (34) zum Generieren der elektrischen Energie aus dem Anodengas und einem Sauerstoffgas enthaltenden Kathodengas aufweist,
**dadurch gekennzeichnet,**
- **dass** das Brennstoffzellensystem (4) einen Wärmeübertrager (56) aufweist, der einerseits in eine Anodenabgas dem Reformer (33) rückführende Rückführungsleitung (54) und andererseits in eine dem Reformer den Oxidator zuführende Oxidatorleitung (37) und/oder in eine der Brennstoffzelle (34) das Kathodengas zuführende Kathodengasleitung (42) eingebunden ist.

2. Hybrid-Antrieb nach Anspruch 1,
**dadurch gekennzeichnet,**
**dass** eine Steuerung (29) zum Betreiben des Hybrid-Antriebs (1) vorgesehen ist, die so ausgestaltet ist, dass in einem Elektromotorbetrieb des Hybrid-Antriebs (1) zumindest ein Teil der vom Brennstoffzellensystem (4) generierten elektrischen Energie zum Betreiben des wenigstens einen Elektromotors (3) und/oder zum Aufladen der wenigstens einen Batterie (6) verwendet wird.

3. Hybrid-Antrieb nach Anspruch 2,
**dadurch gekennzeichnet,**
**dass** die Steuerung (29) so ausgestaltet ist, dass im Elektromotorbetrieb erst ab einer vorbestimmten Antriebsleistung, insbesondere eine vorbestimmte Beschleunigung und/oder eine vorbestimmte Fahrgeschwindigkeit eines mit dem Hybrid-Antrieb (1) ausgestatteten Fahrzeugs, der Verbrennungsmotor (2) zugeschaltet wird und/oder in einen Verbrennungsmotorbetrieb umgeschaltet wird.

4. Hybrid-Antrieb nach Anspruch 2 oder 3,
**dadurch gekennzeichnet,**
**dass** die Steuerung (29) so ausgestaltet ist, dass im Elektromotorbetrieb erst ab einem vorbestimmten elektrischen Energiebedarf des wenigstens einen Elektromotors (3) und/oder eines mit dem Hybrid-Antrieb (1) ausgestatten Fahrzeugs und/oder erst ab einem vorbestimmten Entladungszustand der wenigstens einen Batterie (6) elektrische Energie dem Brennstoffzellensystem (4) für den wenigstens einen Elektromotor (3) und/oder für das Fahrzeug und/oder für die Batterie (6) entnommen wird und/oder das Brennstoffzellensystem (4) eingeschaltet wird.

5. Hybrid-Antrieb nach einem der Ansprüche 2 bis 4, **dadurch gekennzeichnet,**
- **dass** das Brennstoffzellensystem (4) so ausgelegt ist, dass damit in einem Nennbetriebspunkt des Brennstoffzellensystems (4) wenigstens ein elektrischer Verbraucher (27) eines mit dem Hybrid-Antrieb (1) ausgestatteten Fahrzeugs, insbesondere eine Standklimatisierungseinrichtung zur Klimatisierung eines Raums des mit dem Hybrid-Antrieb (1) ausgestatteten Fahrzeugs oder ein elektrisches Bordnetz des Fahrzeugs, auch bei ausgeschaltetem Verbrennungsmotor (2) betrieben werden kann,
- **dass** die Steuerung (29) so ausgestaltet ist, dass im Nennbetriebspunkt des Brennstoffzellensystems (4) gegebenenfalls vorhandene überschüssige elektrische Energie zum Versorgen des wenigstens einen Elektromotors (3) und/oder zum Aufladen der wenigstens einen Batterie (6) verwendet wird.

6. Hybrid-Antrieb nach einem der Ansprüche 1 bis 5,
**dadurch gekennzeichnet,**
**dass** das Brennstoffzellensystem (4) einen Restgasbrenner (46) zum Verbrennen eines Wasserstoffgas enthaltenden Anodenabgases mit einem Sauerstoffgas enthaltenden Kathodenabgas aufweist.

7. Hybrid-Antrieb nach Anspruch 6,
**dadurch gekennzeichnet,**
**dass** das Brennstoffzellensystem (4) einen Wärmeübertrager (51) aufweist, der einerseits in eine Brennerabgas vom Restgasbrenner (46) abführende Brennerabgasleitung (49) und andererseits in eine das Kathodengas der Brennstoffzelle (34) zuführende Kathodengasleitung (42) eingebunden ist.

8. Hybrid-Antrieb nach Anspruch 6 oder 7,
**dadurch gekennzeichnet,**
**dass** das Brennstoffzellensystem (4) einen Wärmeübertrager (52) aufweist, der einerseits in ein Brennerabgas vom Restgasbrenner (46) abführende Brennerabgasleitung (49) und andererseits in einen zur Kühlung des Verbrennungsmotors (2) dienenden Kühlkreis (11) eingebunden ist.

9. Hybrid-Antrieb nach einem der Ansprüche 6 bis 8,
**dadurch gekennzeichnet,**
**dass** das Brennstoffzellensystem (4) einen Wärmeübertrager (52) aufweist, der einerseits in ein Brennerabgas vom Restgasbrenner (46) abführende Brennerabgasleitung (49) und andererseits in einen zum Beheizen eines Raums eines mit dem Hybrid-Antrieb (1) ausgestatteten Fahrzeugs dienenden Heizkreis eingebunden ist.

10. Hybrid-Antrieb nach einem der Ansprüche 1 bis 9,
**dadurch gekennzeichnet,**
**dass** ein Brennerabgas vom Restgasbrenner (46) abführende Brennerabgasleitung (49) an ein Motorabgas vom Verbrennungsmotor (2) abführende Motorabgasleitung (10) angeschlossen ist.

11. Hybrid-Antrieb nach einem der Ansprüche 1 bis 10,
**dadurch gekennzeichnet,**
**dass** der Hybrid-Antrieb (1) als Voll-Hybrid oder als Serien-Hybrid oder Parallel-Hybrid ausgestaltet ist.

12. Kraftfahrzeug mit einem Hybrid-Antrieb (1) nach einem der Ansprüche 1 bis 11.

## Claims

1. A hybrid drive for a motor vehicle,
- with a combustion engine (2) for generating drive power through combustion of a fuel containing hydrocarbon,
- with a fuel tank (5) for storing the fuel,
- with at least one electric motor (3) for generating drive power by converting electric energy,
- with at least one battery (6) for storing electric energy,
- with a fuel cell system (4) for generating electric energy from the fuel and from an oxidant containing oxygen,
- wherein the combustion engine (2) and the fuel cell system (4) for the supply with fuel are connected to the fuel tank (5), and
- the fuel cell system (4) comprises a reformer (33) for generating an anode gas containing hydrogen gas from the fuel and the oxidant and a fuel cell (34) for generating the electric energy from the anode gas and a cathode gas containing oxygen, **characterized**
- **in that** the fuel cell system (4) comprises a heat transfer device (56) which on the one hand is incorporated in a return line (54) returning anode gas to the reformer (33) and on the other hand in an oxidant line (37) returning the oxidant to the reformer and/or in a cathode gas line (42) feeding the cathode gas to the fuel cell (34).

2. The hybrid drive according to Claim 1,
**characterized in that**
a control (29) for operating the hybrid drive (1) is provided which is configured so that in electric motor mode of the hybrid drive (1) at least one part of the electric energy generated by the fuel cell system (4) is used for operating the at least one electric motor (3) and/or for charging the at least one battery (6).

3. The hybrid drive according to Claim 2,
**characterized in that**
the control (29) is configured so that in electric motor mode only from a predetermined drive power, more preferably a predetermined acceleration and/or a predetermined driving speed of a vehicle equipped with a hybrid drive (1) the combustion engine (2) is switched on and/or operation is switched over to combustion engine mode.

4. The hybrid drive according to Claim 2 or 3,
**characterized in that** the control (29) is configured so that in the electric motor mode only from a predetermined electric energy requirement of the at least one electric motor (3) and/or of a vehicle equipped with a hybrid drive (1) and/or only from a predetermined discharge state of the at least one battery (6) electric energy for the at least one electric motor (3) and/or for the vehicle and/or for the battery (6) is drawn from the fuel cell system (4) and/or the fuel cell system (4) is switched on.

5. The hybrid drive according to any one of the Claims 2 to 4,
**characterized in that**
- the fuel cell system (4) is designed so that at a rated operating point of the fuel cell system (4) it can be used to operate at least one electric consumer (27) of a vehicle equipped with a hybrid drive (1), more preferably an independent air conditioning device for the air conditioning of a space of the vehicle equipped with a hybrid drive (1) or an electric on-board network of the vehicle even with combustion engine (2) switched off,
- the control (29) is configured so that at the rated operating point of the fuel cell system (4) any excess electric energy present is used for supplying the at least one electric motor (3) and/or for charging the at least one battery (6).

6. The hybrid drive according to any one of the Claims 1 to 5,
**characterized in that**
the fuel cell system (4) comprises a residual gas burner (46) for burning an anode waste gas containing hydrogen gas with a cathode waste gas containing oxygen gas.

7. The hybrid drive according to Claim 6,
**characterized in that**
the fuel cell system (4) comprises a heat transfer device (51) which on the one hand is incorporated in a burner waste gas line (49) discharging burner waste gas from the residual gas burner (46) and in a cathode gas line (42) feeding the cathode gas to the fuel cell (34) on the other hand.

8. The hybrid drive according to Claims 6 or 7,
**characterized in that**
the fuel cell system (4) comprises a heat transfer device (52) which on the one hand is incorporated in a burner waste gas line (49) discharging burner waste gas from the residual gas burner (46) and on the other hand in a cooling circuit (11) which serves for the cooling of the combustion engine (2).

9. The hybrid drive according to any one of the Claims 6 to 8,
**characterized in that**
the fuel cell system (4) comprises a heat transfer device (59) which on the one hand is incorporated in a burner waste gas line (49) discharging burner waste gas from the residual gas burner (46) and on the other hand in a heating circuit which serves for the heating of a space of a vehicle equipped with the hybrid drive (1).

10. The hybrid drive according to any one of the Claims 1 to 9,
**characterized in that**
a burner waste gas line (49) discharging burner waste gas from the residual gas burner (46) is connected to an engine waste gas line (10) discharging engine waste gas from the combustion engine (2).

11. The hybrid drive according to any of the Claims 1 to 10,
**characterized in that**
the hybrid drive (1) is configured as full hybrid or as series hybrid or parallel hybrid.

12. The motor vehicle with a hybrid drive (1) according to any one of the Claims 1 to 11.

## Revendications

1. Entraînement hybride pour véhicule automobile,
- comportant un moteur à combustion interne(2) pour générer une puissance d'entraînement par combustion d'un carburant contenant des hydrocarbures,
- comportant un réservoir de carburant (5) pour stocker le carburant,
- comportant au moins un moteur électrique (3) pour générer une puissance d'entraînement par conversion d'énergie électrique,
- comportant au moins une batterie (6) pour stocker de l'énergie électrique,
- comportant un système de cellule combustible (4) pour générer de l'énergie électrique à partir du carburant et à partir d'un oxydateur contenant de l'oxygène,
- dans lequel le moteur à combustion interne (2) et le système de cellule combustible (4) pour l'alimentation en carburant sont raccordés au réservoir de carburant (5), et
- le système de cellule combustible (4) présente un reformeur (33) pour générer un gaz d'anode contenant un gaz d'hydrogène à partir du carburant et de l'oxydateur et une cellule combustible (34) pour générer l'énergie électrique à partir du gaz d'anode et d'un gaz de cathode contenant un gaz d'oxygène,
**caractérisé en ce que**
- le système de cellule combustible (4) présente un échangeur de chaleur (56), qui est intégré d'un côté dans une conduit de réintroduction (54) réintroduisant un gaz d'échappement d'anode dans le reformeur (33) et d'un autre côté dans une conduit d'oxydateur (37) introduisant l'oxydateur dans le reformeur et/ou dans une conduite de gaz de cathode (42) introduisant le gaz de cathode dans la cellule combustible (34).

2. Entraînement hybride selon la revendication 1,
**caractérisé en ce que**
une unité de commande (29) pour exploiter l'entraînement hybride (1) est prévue, qui est conçue de telle sorte que dans un fonctionnement de moteur électrique de l'entraînement hybride (1) au moins une partie de l'énergie électrique générée par le système de cellule combustible (4) soit employée pour exploiter au moins un moteur électrique (3) et/ou pour charger au moins une batterie (6).

3. Entraînement hybride selon la revendication 2,
**caractérisé en ce que**
l'unité de commande (29) est conçue de telle sorte que dans le fonctionnement de moteur électrique seulement à partir d'une puissance d'entraînement prédéterminée, notamment une accélération prédéterminée et/ou une vitesse de conduite prédéterminée d'un véhicule équipé de l'entraînement hybride (1), le moteur à combustion interne (2) soit activé et/ou soit commuté en un fonctionnement de moteur à combustion interne.

4. Entraînement hybride selon la revendication 2 ou 3,
**caractérisé en ce que**
l'unité de commande (29) est conçue de telle sorte que dans le fonctionnement de moteur électrique seulement à partir d'un besoin en énergie électrique prédéterminé d'au moins un moteur électrique (3) et/ou d'un véhicule équipé de l'entraînement hybride (1) et/ou seulement à partir d'un état de décharge prédéterminé d'au moins une batterie (6), de l'énergie électrique soit prélevée du système de cellule combustible (4) pour au moins un moteur électrique (3) et/ou pour le véhicule et/ou pour la batterie (6) et/ou le système de cellule combustible (4) soit mis en service.

5. Entraînement hybride selon une des revendications 2 à 4,
**caractérisé en ce que**
- le système de cellule combustible (4) est conçue de telle sorte que à un point de fonctionnement nominal du système de cellule combustible (4) au moins un appareil consommateur électrique (27) d'un véhicule équipé de l'entraînement hybride (1), notamment un dispositif de climatisation indépendant pour climatiser un espace du véhicule équipé de l'entraînement hybride (1) ou un réseau de bord électrique du véhicule puisse être mis en fonctionnement, même quand le moteur à combustion interne (2) est éteint,
- l'unité de commande (29) est conçue de telle sorte que à un point de fonctionnement nominal du système de clelule combustible (4) l'énergie électrique en excédent présente le cas échéant soit employée pour alimenter au moins un moteur électrique (3) et/ou pour charger au moins une batterie (6).

6. Entraînement hybride selon une des revendications 1 à 5,
**caractérisé en ce que**
le système de cellule combustible (4) présente un brûleur de gaz résiduel (46) pour brûler un gaz d'échappement d'anode contenant un gaz d'hydrogène avec un gaz d'échappement de cathode contenant un gaz d'oxygène.

7. Entraînement hybride selon la revendication 6,
**caractérisé en ce que**
le système de cellule combustible (4) présente un échangeur de chaleur (51), qui est intégré d'un côté dans une conduite de gaz d'échappement de brûleur (49) évacuant un gaz d'échappement de brûleur du brûleur de gaz résiduel (46) et d'un autre côté dans une conduite de gaz de cathode (42) introduisant le gaz de cathode dans la cellule combustible (34).

8. Entraînement hybride selon la revendication 6 ou 7,
**caractérisé en ce que**
le système de cellule combustible (4) présente un échangeur de chaleur (52), qui est intégré d'un côté dans une conduite de gaz d'échappement de brûleur (49) évacuant un gaz d'échappement de brûleur du brûleur de gaz résiduel (46) et d'une autre côté dans un circuit de refroidissement (11) servant à refroidir le moteur à combustion interne (2).

9. Entraînement hybride selon une des revendications 6 à 8,
**caractérisé en ce que**
le système de cellule combustible (4) présente un échangeur de chaleur (52), qui est intégré d'un côté dans une conduit de gaz d'échappement de brûleur (49) évacuant un gaz d'échappement de brûleur du brûleur de gaz résiduel (46) et d'un autre côté dans un circuit de chauffage servant à chauffer un espace d'un véhicule équipé de l'entraînement hybride (1).

10. Entraînement hybride selon une des revendications 1 à 9,
**caractérisé en ce que**
une conduite de gaz d'échappement de brûleur (49) évacuant un gaz d'échappement de brûleur du brûleur de gaz résiduel (46) est raccordée à une conduite de gaz d'échappement de moteur (10) évacuant un gaz d'échappement de moteur du moteur à combustion interne (2).

11. Entraînement hybride selon ne des revendications 1 à 10,
**caractérisé en ce que**
l'entraînement hybride (1) est conçu comme totalement hybride ou comme hybride série ou hybride parallèle.

12. Véhicule automobile comportant un entraînement hybride (1) selon une des revendications 1 à 11.
